# EUROPEAN PATENT APPLICATION

(11) **EP 2 762 835 A2**
(43) Date of publication of application: **06.08.2014**
(21) Application number: 14153449.5
(22) Date of filing: 31.01.2014
(51) Int. Cl.: G01C 21/16, G01C 21/20, G01C 21/34

(54) **Travel mode determination devices and methods for controlling a travel mode determination device**

(30) Priority: 01.02.2013 EP 13153646; 26.02.2013 US 201361769636 P
(71) Applicant: Intel IP Corporation, Santa Clara, CA 95054 (US)
(72) Inventor: Mertens, Christophe, 3010 Kessel-Lo (BE)
(74) Representative: Viering, Jentschura & Partner Patent- und Rechtsanwälte

(57) **Abstract**

A travel mode determination device is described comprising: an inertial sensor (or a plurality of inertial sensors); a first filter configured to filter a first frequency band of the inertial sensor (for example in an electrical car (for example in motion), or on a bicycle (for example in motion); a second filter configured to filter a second frequency band of the inertial sensor; a comparator configured to compare a power spectral density of the first filter with a power spectral density of the second filter; and a travel mode determination circuit configured to determine a travel mode of the travel mode determination device based on the comparator.

## Description

### Cross-Reference To Related Applications

This application claims the benefit of priority of the European patent application No. 13153646.8, filed on 01 February 2013, and of US provisional patent application No. 61/769,636, filed on 26 February 2013, the content of both being hereby incorporated by reference in its entirety for all purposes.

### Technical Field

The present disclosure generally relates to travel mode determination devices and methods for controlling a travel mode determination device.

### Background

Various devices may be desired to operate in different modes depending on how they move (for example depending on how the person, which uses the device, moves, or depending on how another device to which the device is attached, moves). Thus, there may be a need to determine which kind of movement (or travel) is present.

### Brief Description of the Drawings

In the drawings, like reference characters generally refer to the same parts throughout the different views. The drawings are not necessarily to scale, emphasis instead generally being placed upon illustrating the principles of various aspects of this disclosure. In the following description, various aspects are described with reference to the following drawings, in which:
- Figure 1A: shows a travel mode determination device with two filters;
- Figure 1B: shows a travel mode determination device with a further filter;
- Figure 1C: shows a flow diagram illustrating a travel mode determination method.
- Figure 2: illustrates a device in the form of a cellphone.
- Figure 3: is a simplified diagram of the main cell phone components.
- Figure 4: is a diagrammatic view of the components of the device.
- Figure 5: is a flow chart of the process implemented by the device.
- Figure 6: is a chart characteristic of the low and high frequency band excitation of the inertial sensor for a journey including a mixed sequence of pedestrian and road travel.
- Figure 7: is a chart of the low and high frequency band power spectral densities of the journey sample in figure 6.

### Description of Embodiments

The following detailed description refers to the accompanying drawings that show, by way of illustration, specific details and aspects of this disclosure in which various aspects of this disclosure may be practiced. Other aspects may be utilized and structural, logical, and electrical changes may be made without departing from the scope of various aspects of this disclosure. The various aspects of this disclosure are not necessarily mutually exclusive, as some aspects of this disclosure can be combined with one or more other aspects of this disclosure to form new aspects.

The terms "coupling" or "connection" are intended to include a direct "coupling" or direct "connection" as well as an indirect "coupling" or indirect "connection", respectively.

The word "exemplary" is used herein to mean "serving as an example, instance, or illustration". Any aspect of this disclosure or design described herein as "exemplary" is not necessarily to be construed as preferred or advantageous over other aspects of this disclosure or designs.

The travel mode determination device may include a memory which may for example be used in the processing carried out by the travel mode determination device. The navigation system may include a memory which may for example be used in the processing carried out by the navigation system. The mobile radio communication device may include a memory which may for example be used in the processing carried out by the mobile radio communication device. The portable device may include a memory which may for example be used in the processing carried out by the portable device. A memory may be a volatile memory, for example a DRAM (Dynamic Random Access Memory) or a non-volatile memory, for example a PROM (Programmable Read Only Memory), an EPROM (Erasable PROM), EEPROM (Electrically Erasable PROM), or a flash memory, for example, a floating gate memory, a charge trapping memory, an MRAM (Magnetoresistive Random Access Memory) or a PCRAM (Phase Change Random Access Memory).

As used herein, a "circuit" may be understood as any kind of a logic implementing entity, which may be special purpose circuitry or a processor executing software stored in a memory, firmware, or any combination thereof. Furthermore, a "circuit" may be a hard-wired logic circuit or a programmable logic circuit such as a programmable processor, for example a microprocessor (for example a Complex Instruction Set Computer (CISC) processor or a Reduced Instruction Set Computer (RISC) processor). A "circuit" may also be a processor executing software, for example any kind of computer program, for example a computer program using a virtual machine code such as for example Java. Any other kind of implementation of the respective functions which will be described in more detail below may also be understood as a "circuit". It may also be understood that any two (or more) of the described circuits may be combined into one circuit.

Description is provided for devices, and description is provided for methods. It will be understood that basic properties of the devices also hold for the methods and vice versa. Therefore, for sake of brevity, duplicate description of such properties may be omitted.

It will be understood that any property described herein for a specific device may also hold for any device described herein. It will be understood that any property described herein for a specific method may also hold for any method described herein.

Various devices may be desired to operate in different modes depending on how they move (for example depending on how the person, which uses the device, moves, or depending on how another device to which the device is attached, moves). Thus, there may be a need to determine which kind of movement (or travel) is present.

For example, global navigation satellite systems (GNSS) are used in numerous devices to calculate an instantaneous global position of the device, on or above the Earth's surface or at sea. GNSS uses the position to direct the user or a robot vehicle toward a programmed destination via a route appropriate to a mode of travel. For example, different modes of travel may be pedestrian or road or others, like described in more detail below. For these purposes pedestrian mode means travel on foot or vehicle (such as a wheel chair) in an essentially pedestrian area such as a footpath (sidewalk). Road mode is via a vehicle such as an automobile, truck, motorcycle or push bike on a road intended for vehicular traffic. It is important for a navigation device to distinguish between the modes in order to select appropriate guidance to a user. While many devices already provide means for the user to make a selection, it is not unusual for the user to forget to make the mode switch.

GNSS devices rely on a receiver which receives a signal from each of at least four GPS satellites to locate the instantaneous position of the device. Each satellite signal carries a time signal which allows the receiver device to calculate the transit time from the signal transmission to reception assuming that each signal travels in a straight line. From this, the device can calculate its position with an accuracy of the order of tens of meters and often much better. Accuracy depends on a number of factors including the quality of the device but is generally very dependent on the number of satellites which are simultaneously visible to the device.

GNSS devices commonly correlate the position with coordinates on a map contained within a memory and use this information to provide guidance information to the user in the form of audible and/or visible instructions to follow a path to a destination. GNSS cannot directly determine the orientation and speed of the device and hence the user. Speed and orientation are only determined by inference from changes in position over time. It is essential that the device infer the correct orientation and speed in order for the device to provide accurate appropriately timed instructions.

One factor which leads to errors of position in GNSS is a situation which leads to one or more satellite signals travelling over a non-linear path to the GNSS device receiver. This can occur in canyon-like environments where a satellite signal is reflected from nearby structures, such as buildings, before reaching the device receiver. Because this leads to errors of position, multi-pathing also leads to errors of heading and speed. When the GNSS incorrectly positions the GNSS device on the map (map snapping) it will provide false guidance, potentially by setting a false navigation mode.

In the road mode a GNSS device, especially one embedded in a cell-phone may be handled by a user in a manner which generates signals indicative of abrupt changes of direction compatible with a pedestrian mode. In such situations the GNSS device may switch to pedestrian mode and calculate the route to destination accordingly although the device is travelling in a vehicle.

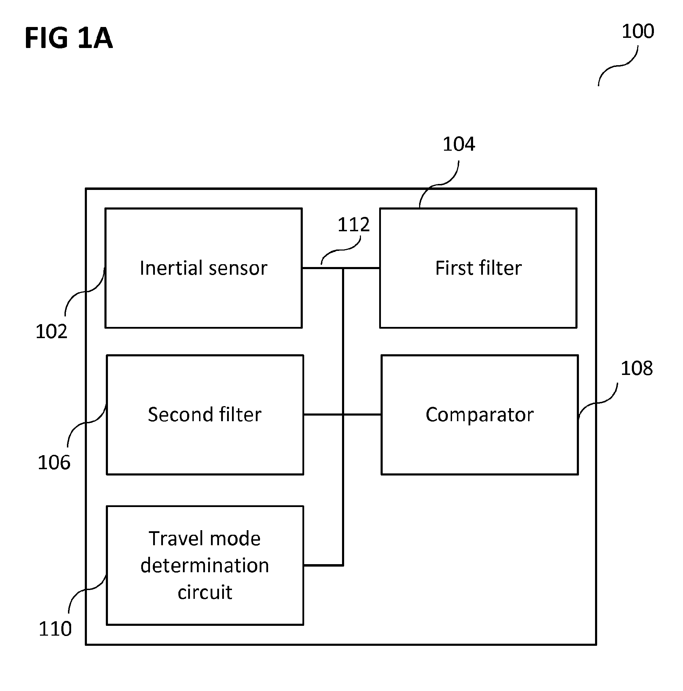

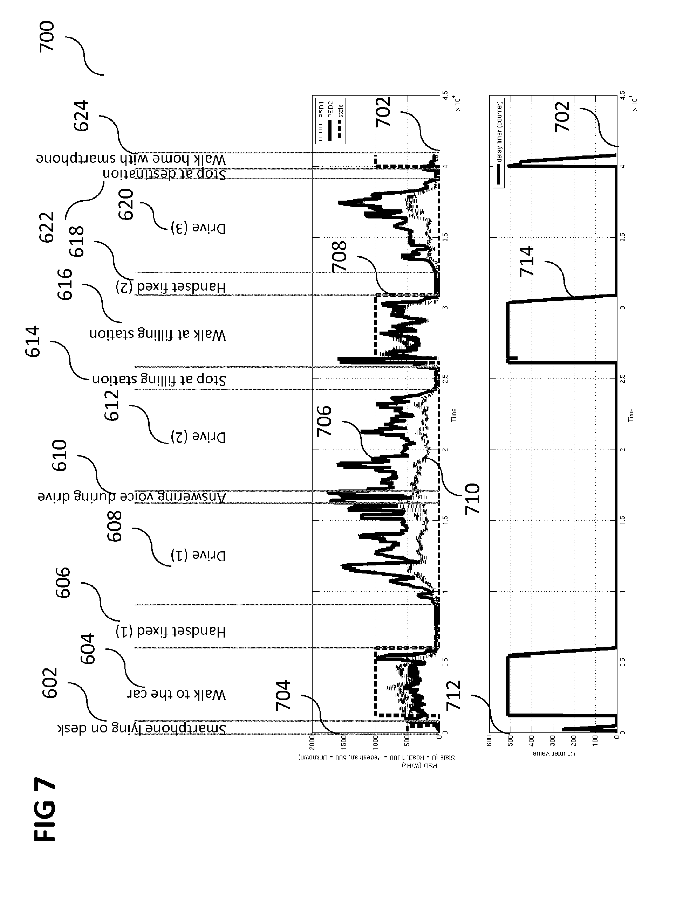

Figure 1A shows a travel mode determination device 100. The travel mode determination device 100 may include an inertial sensor 102. It will be understood that a plurality of inertial sensors may be used. In the examples shown and described below with reference to Figure 7 and Figure 8, only usage is made of an accelerometer; however, it will be understood that more general, also other types of inertial sensors e.g. a gyroscope could be used to bring additional information and hence increased robustness. The travel mode determination device 100 may further include a first filter 104 configured to filter a first frequency band of the inertial sensor 102 (for example an accelerometer, for example a 1-axis-accelerometer, a 2-axes-accelerometer, or for example a 3-axes accelerometer; for example a gyroscope, for example a 1-axis-gyroscope, for example a 2-axes gyroscope, or for example a 3-axes gyroscope). The travel mode determination device 100 may further include a second filter 106 configured to filter a second frequency band of the inertial sensor 102. The travel mode determination device 100 may further include a comparator 108 configured to compare a power spectral density of the first filter 104 with a power spectral density of the second filter 106. The travel mode determination device 100 may further include a travel mode determination circuit 110 configured to determine a travel mode of the travel mode determination device based on the comparator 108. The inertial sensor 102, the first filter 104, the second filter 106, the comparator 108, and the travel mode determination circuit 110 may be coupled with each other, for example via a connection 112, for example an optical connection or an electrical connection, such as for example a cable or a computer bus or via any other suitable electrical connection to exchange electrical signals.

The first frequency band of the inertial sensor 102 may be a first frequency band of an output of the inertial sensor 102. The second frequency band of the inertial sensor 102 may be a second frequency band of an output of the inertial sensor 102. The power spectral density of the first filter 104 may be a power spectral density of an output of the first filter 104. The power spectral density of the second filter 106 may be a power spectral density of an output of the second filter 106. The travel mode determination circuit 110 may be configured to determine the travel mode of the travel mode determination device 100 based on an output of the comparator 108.

In other words, the travel mode determination device 100 may determine a mode of travel based on a comparison of a power spectral density of a first spectral band of frequencies determined by the inertial sensor 102 with a power spectral density of a second spectral band of the frequencies. It will be understood that a band does not necessarily be connected; instead, a band may also include two or more distinct intervals of frequencies.

The travel mode determination device 100 may further include at least one further inertial sensor (not shown).

The inertial sensor 102 (and/ or one or more of the further inertial sensors) may include or may be at least one sensor selected from a list of sensors consisting of: an accelerometer; a one-axis accelerometer; a two-axes accelerometer; a three-axes accelerometer; a gyroscope; a one-axis gyroscope; a two-axes gyroscope; a three-axes gyroscope; and any combination thereof.

The travel mode may include or may be at least one travel mode selected from a list of travel modes consisting of: walking; driving; using a car with a Diesel engine; using a car with a petrol engine; using a car with a gas engine; using an electrical car; using an electrical car in motion; using a bicycle; using a bicycle in motion; using a road of good quality; using a deteriorated road; using a bus; using a train; using a ship; using an airplane; a pedestrian navigation mode; and a road navigation mode.

The comparator 108 may be configured to determine a ratio of the power spectral density of the first filter 104 and the power spectral density of the second filter 106. The travel mode determination circuit 110 may be configured to determine the travel mode based on the ratio.

The travel mode determination circuit 110 may further be configured to determine the travel mode based on whether the ratio fulfils a pre-determined criterion.

The pre-determined criterion may be based on a pre-determined threshold.

The pre-determined threshold may be determined using a learning method.

The first filter 104 may include a filter circuit using a first set of filter parameters. The second filter 104 may include the filter circuit using a second set of filter parameters. In other words, the first filter 104 and the second filter 106 may use the same hardware, but may use different configurations of the hardware.

The first frequency band may be or may include a low frequency band.

The second frequency band may be a high frequency band.

The first filter 104 may be configured to filter a low frequency band selected to isolate excitations arising when the travel mode determination device is carried by a pedestrian and the second filter 106 may be configured to filter a high frequency band to isolate excitations experienced by the travel mode determination device carried in a motor vehicle.

The first filter 104 may be configured to filter a frequency band between 2Hz and 10Hz and the second filter 106 may be configured to filter a frequency band between 10Hz and 25Hz. For example, the sampling rate may be at least 50 Hz.

The comparator 108 may be configured to compare a low frequency power spectral density with a first predetermined threshold and the travel mode determination device 100 may be configured to select a road navigation mode when the low frequency power spectral density is smaller than said first threshold.

The comparator 108 may be configured to compare the low frequency spectral density with a second predetermined threshold larger than the first threshold. The travel mode determination device 100 may further include a calculator (not shown) configured to calculate a ratio of the low frequency band power spectral density and the high frequency band power spectral density to generate a power spectral density ratio. The comparator 108 may be configured to compare the power spectral density ratio with a high power spectral density ratio threshold. The travel mode determination device 100 may be configured to generate the mode selection signal to select the pedestrian navigation mode when the low frequency spectral density is between the first threshold and the second threshold and the power spectral density ratio exceeds the high spectral density ratio threshold; and the travel mode determination device 100 may be configured to generate the mode selection signal to select the road navigation mode when the power spectral density ratio is less than the high power spectral density ratio.

The travel mode determination device 100 may be configured so that: when the low frequency spectral density exceeds the second threshold, and when the power spectral density ratio is greater than a lower spectral density ratio threshold, the mode selection signal is generated to select the pedestrian navigation mode; and when the low frequency spectral density exceeds the second threshold, and when the power spectral density ratio is less than the lower spectral density ratio threshold the mode selection signal is generated to select the road navigation mode.

A timer may be set to delay a switch from the pedestrian navigation mode to the road navigation mode when the mode discrimination routine responds to the inertial frequency sample to implement a change from the pedestrian navigation mode to the road navigation mode.

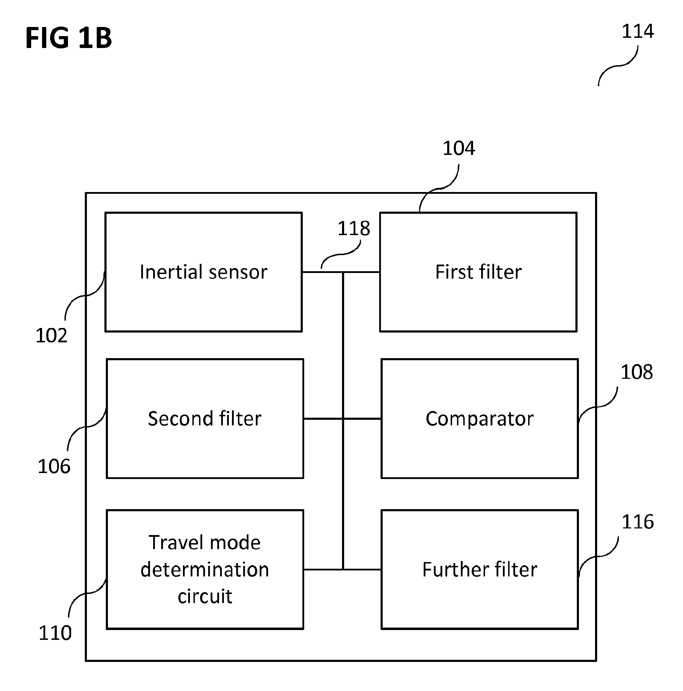

Figure 1B shows a travel mode determination device 114. The travel mode determination device 114 may, similar to the travel mode determination device 100 of Figure 1A, include an inertial sensor 102 (or a plurality of inertial sensors). The travel mode determination device 114 may, similar to the travel mode determination device 100 of Figure 1A, further include a first filter 104 configured to filter a first frequency band of an output of the inertial sensor 102. The travel mode determination device 114 may, similar to the travel mode determination device 100 of Figure 1A, further include a second filter 106 configured to filter a second frequency band of the output of the inertial sensor 102. The travel mode determination device 114 may, similar to the travel mode determination device 100 of Figure 1A, further include a comparator 108 configured to compare a power spectral density of an output of the first filter 104 with a power spectral density of an output of the second filter 106. The travel mode determination device 114 may, similar to the travel mode determination device 100 of Figure 1A, further include a travel mode determination circuit 110 configured to determine a travel mode of the travel mode determination device based on an output of the comparator 108. The travel mode determination device 114 may further include a further filter 116, like will be described in more detail below. The inertial sensor 102, the first filter 104, the second filter 106, the comparator 108, the travel mode determination circuit 110, and the further filter 116 may be coupled with each other, for example via a connection 118, for example an optical connection or an electrical connection, such as for example a cable or a computer bus or via any other suitable electrical connection to exchange electrical signals.

The further filter 116 may be configured to filter a further frequency band of the inertial sensor 102. The comparator 108 may be configured to compare a power spectral density of the further filter 116 with a at least one of the power spectral density of the first filter 104 or the power spectral density of the second filter 106.

The further frequency band of the inertial sensor 102 may be a further frequency band of the output of the inertial sensor 102. The power spectral density of the further filter 116 may be a power spectral density of an output of the further filter 116.

The travel mode determination circuit 110 may further be configured to determine the travel mode further based on at least one of the power spectral density of the first filter or the power spectral density of the second filter.

The travel mode determination circuit 110 may further be configured to determine the travel mode based on at least one of whether the power spectral density of the first filter fulfils a pre-determined criterion or whether the power spectral density of the second filter fulfils a pre-determined criterion.

The pre-determined criterion may be based on a pre-determined threshold.

The pre-determined threshold may be determined using a learning method.

The travel mode determination circuit 110 may further be configured to determine the travel mode further based on at least one of a speed of the travel mode determination device 114, an altitude of the travel mode determination device 114, a brightness of the surrounding of the travel mode determination device 114, a loudness of the surrounding of the travel mode determination device 114.

In an aspect of this disclosure, a navigation system may be provided, including the travel mode determination device as described above. The navigation system may be configured to determine an operation mode based on the determined travel mode.

In an aspect of this disclosure, a mobile radio communication device may be provided, including the travel mode determination device as described above. The mobile radio communication device may be configured to determine an operation mode based on the determined travel mode.

In an aspect of this disclosure, a portable device including a navigation system and the travel mode determination device as described above may be provided. The portable device may further include: a global navigation satellite subsystem, an inertial navigation subsystem, and a processor; the processor being responsive to signals output by said global navigation satellite subsystem and said inertial navigation subsystem to implement a navigation mode discrimination system for a mode of navigation; wherein said navigation mode discrimination system is arranged to sample the frequency of excitations of signals output from the inertial sensor or sensors and determine one of the navigation modes based on the frequency of excitations of said inertial sensor or sensors.

The portable device may further include: a sampler to sample the frequency of excitations of signals from the inertial sensor; a low band filter and a high band filter for filtering the inertial frequency sample to a low frequency band sample and a high frequency band sample, a calculator module responsive to each of said low frequency band sample and said high frequency band sample for calculating a low frequency band power spectral density and a high frequency band power spectral density, a comparator configured to compare the low frequency band power spectral density and the high frequency band power spectral density to generate a mode selection signal; and the global navigation satellite subsystem being responsive to the mode selection signal to select one of the navigation modes.

The low frequency band filter may be adapted to filter a low frequency band selected to isolate excitations arising when the device is carried by a pedestrian and the high frequency band filter may be adapted to filter a high frequency band to isolate excitations experienced by the device carried in a motor vehicle.

The low frequency band filter may be adapted to filter a frequency band between 2Hz and 10Hz and the high frequency band filter is adapted to filter a frequency band between 10Hz and 25Hz.

A comparator may be arranged to compare the low frequency power spectral density with a first predetermined threshold and where the device is configured to select the road navigation mode when the low frequency power spectral density is smaller than said first threshold.

A comparator may be arranged to compare the low frequency spectral density with a second predetermined threshold larger than the first threshold, a calculator to calculate a ratio of the low frequency band power spectral density and the high frequency band power spectral density to generate a power spectral density ratio; and a comparator arranged to compare the power spectral density ratio with a high power spectral density ratio threshold; wherein the system is arranged to generate the mode selection signal to select the pedestrian navigation mode when the low frequency spectral density is between the first threshold and the second threshold and the power spectral density ratio exceeds the high spectral density ratio threshold; and the road navigation mode when the power spectral density ratio is less than the high power spectral density ratio.

The portable device of claim 24, wherein the system is arranged so that when: the low frequency spectral density exceeds the second threshold, and the power spectral density ratio is greater than a lower spectral density ratio threshold, the mode selection signal is generated to select the pedestrian navigation mode; and the low frequency spectral density exceeds the second threshold, and the power spectral density ratio is less than the lower spectral density ratio threshold the mode selection signal is generated to select the road navigation mode.

A timer may be set to delay a switch from the pedestrian navigation mode to the road navigation mode when the mode discrimination routine responds to the inertial frequency sample to implement a change from the pedestrian navigation mode to the road navigation mode.

The device may be a communication device.

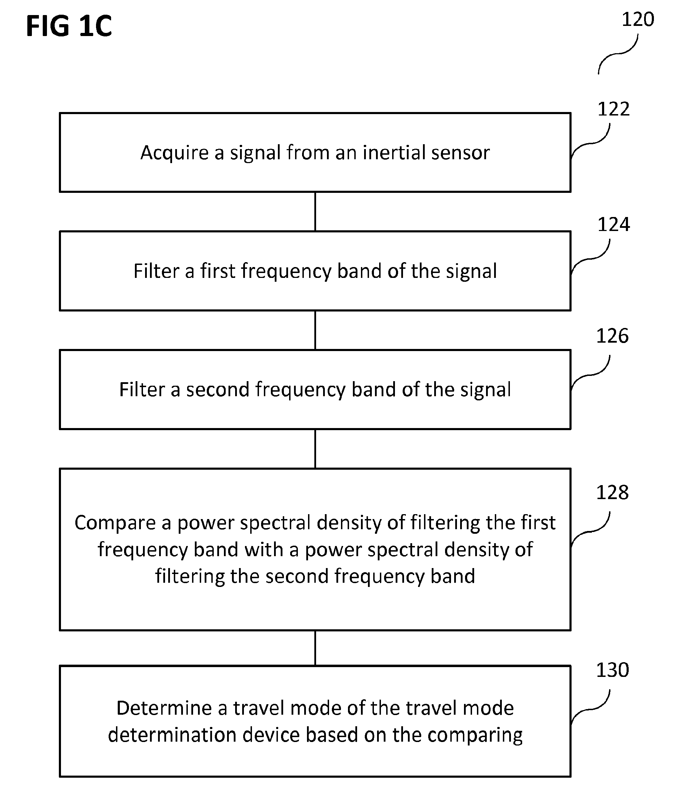

Figure 1C shows a flow diagram 120 illustrating a method for controlling a travel mode determination device. In 122, the travel mode determination device may acquire a signal from an inertial sensor or multiple inertial sensors. In 124, a first filter of the travel mode determination device may filter a first frequency band of the signal. In 126, a second filter of the travel mode determination device may filter a second frequency band of the signal. In 128, a comparator of the travel mode determination device may compare a power spectral density of filtering the first frequency band with a power spectral density of filtering the second frequency band. In 130, a travel mode determination circuit of the travel mode determination device may determine a travel mode of the travel mode determination device based on the comparing.

The power spectral density of filtering the first frequency band may be a power spectral density of an output of filtering the first frequency band. The power spectral density of filtering the second frequency band may be a power spectral density of an output of filtering the second frequency band.

The travel mode may include or may be at least one travel mode selected from a list of travel modes consisting of: walking; driving; using a car with a Diesel engine; using a car with a petrol engine; using a car with a gas engine; using an electrical car; using an electrical car in motion; using a bicycle; using a bicycle in motion; using a road of good quality; using a deteriorated road; using a bus; using a train; using a ship; using an airplane; a pedestrian navigation mode; and a road navigation mode.

The method may further include acquiring a signal (or signals) from at least one further inertial sensor (not shown).

The inertial sensor (and/ or one or more of the further inertial sensors) may include or may be at least one sensor selected from a list of sensors consisting of: an accelerometer; a one-axis accelerometer; a two-axes accelerometer; a three-axes accelerometer; a gyroscope; a one-axis gyroscope; a two-axes gyroscope; a three-axes gyroscope; and any combination thereof.

The method may further include: determining a ratio of the power spectral density of filtering the first frequency band and the power spectral density of filtering the second frequency band; and determining the travel mode based on the ratio.

The method may further include determining the travel mode based on whether the ratio fulfils a pre-determined criterion.

The pre-determined criterion may be based on a pre-determined threshold.

The pre-determined threshold may be determined using a learning method

Filtering the first frequency band may be done (for example using a filter circuit) using a first set of filter parameters. Filtering the second frequency band may be done (for example using the (same) filter circuit) using a second set of filter parameters.

The first frequency band may be a low frequency band.

The second frequency band may be a high frequency band.

Filtering the first frequency band may include or may be filtering a low frequency band selected to isolate excitations arising when the travel mode determination device is carried by a pedestrian and the second filtering may include or may be filtering a high frequency band to isolate excitations experienced by the travel mode determination device carried in a motor vehicle.

The first frequency band may include or may be a frequency band between 2Hz and 10Hz and the second frequency band may include or may be a frequency band between 10Hz and 25Hz.

The method may further include: comparing a low frequency power spectral density with a first predetermined threshold; and selecting a road navigation mode when the low frequency power spectral density is smaller than said first threshold.

The method may further include: comparing the low frequency spectral density with a second predetermined threshold larger than the first threshold, calculating a ratio of the low frequency band power spectral density and the high frequency band power spectral density to generate a power spectral density ratio; and comparing the power spectral density ratio with a high power spectral density ratio threshold; generating the mode selection signal to select the pedestrian navigation mode when the low frequency spectral density is between the first threshold and the second threshold and the power spectral density ratio exceeds the high spectral density ratio threshold; and generating the mode selection signal to select the road navigation mode when the power spectral density ratio is less than the high power spectral density ratio.

When the low frequency spectral density exceeds the second threshold, and when the power spectral density ratio is greater than a lower spectral density ratio threshold, the mode selection signal may be generated to select the pedestrian navigation mode. When the low frequency spectral density exceeds the second threshold, and when the power spectral density ratio is less than the lower spectral density ratio threshold the mode selection signal may be generated to select the road navigation mode.

A timer of the travel mode determination device may be set to delay a switch from the pedestrian navigation mode to the road navigation mode when the mode discrimination routine responds to the inertial frequency sample to implement a change from the pedestrian navigation mode to the road navigation mode.

The method may further include: filtering a further frequency band of the signal; comparing a power spectral density of filtering the further frequency band with a at least one of the power spectral density of filtering the first frequency band or the power spectral density of filtering the second frequency band.

The power spectral density of filtering the further frequency band may be a power spectral density of an output of filtering the further frequency band.

The method may further include: determining the travel mode further based on at least one of the power spectral density of filtering the first frequency band or the power spectral density of filtering the second frequency band.

The method may further include determining the travel mode based on at least one of whether the power spectral density of filtering the first frequency band fulfils a pre-determined criterion or whether the power spectral density of filtering the second frequency band fulfils a pre-determined criterion.

The pre-determined criterion may be based on a pre-determined threshold.

The pre-determined threshold may be determined using a learning method.

The method may further include: determining the travel mode further based on at least one of a speed of the travel mode determination device, an altitude of the travel mode determination device, a brightness of the surrounding of the travel mode determination device, a loudness of the surrounding of the travel mode determination device.

In an aspect of this disclosure, a method for controlling a navigation system may include the method for controlling a travel mode determination device described above. The navigation system may determine an operation mode based on the determined travel mode.

In an aspect of this disclosure, a method for controlling a mobile radio communication device may include the method for controlling a travel mode determination device described above. The mobile radio communication device may determine an operation mode based on the determined travel mode.

In an aspect of this disclosure, a navigation process implemented in a portable device having the inertial sensor may include the method for controlling a travel mode determination device described above, and my further include: executing a global navigation satellite routine and an inertial navigation routine, said inertial navigation routine responsive to signals output from the inertial sensor or multiple inertial sensors, and including: a navigation mode discrimination routine including sampling the frequency of excitations of the inertial sensor, and processing the inertial frequency sample to determine a pedestrian navigation mode or a road navigation mode.

The navigation process may further include: filtering the frequency sample to isolate a low frequency band and a high frequency band; calculating the power spectral densities of the low frequency band and the high frequency band; comparing the power spectral densities of the low frequency band and the high frequency band and; selecting the navigation mode according to the comparison of the power spectral densities of the low frequency band and the high frequency band.

The low frequency band may isolate excitations arising when the device is carried by a pedestrian, and the high frequency band may isolate excitations experienced as a consequence of the device being carried in a motor vehicle.

The low frequency band may be in the range 2Hz to 10Hz and the high frequency band may be in the range from 10 Hz to 25 Hz.

The navigation process may further include: selecting the road navigation mode when the low frequency spectral density is lower than a predetermined first threshold.

The navigation process may further include: calculating a ratio of the low frequency band power spectral density to the high frequency band power spectral density to generate a power spectral density ratio; selecting the pedestrian navigation mode when the low frequency band power spectral density is between the first and second thresholds and the power spectral density ratio is greater than a high spectral density ratio threshold, and selecting a road navigation mode when the low frequency power spectral density is between the first and second thresholds and the power spectral density ratio is less than the high power spectral density ratio threshold.

The navigation process may be a process of selecting pedestrian navigation mode when the low frequency spectral density exceeds the second threshold, and the power spectral density ratio is greater than a lower power spectral density ratio threshold; and the navigation process may be a process of selecting road navigation mode when the low frequency spectral density exceeds the second threshold, and the power spectral density ratio is less than the lower power spectral density ratio threshold.

When the discrimination routine selects the road navigation mode from the pedestrian navigation mode the implementation of said road navigation mode is delayed by a timer.

The navigation process may be implemented in a communication device.

It will be understood that although the thresholds have been described with respect to the portable device, they may be applied to any travel mode determination device, for example the travel mode determination device as shown in Figure 1A.

In an aspect of this disclosure, an integrated global navigation satellite system and inertial navigation system may be provided.

Various aspects of this disclosure concern the implementation of an integrated global navigation satellite system and inertial navigation systems in a portable mobile device having at least a pedestrian navigation mode and a road vehicle navigation mode. For example, the system addresses a problem of navigation mode selection at pedestrian speeds.

Various aspects of this disclosure aim to alleviate at least some of the technical limitations of the prior art by the provision of a portable mobile device having a navigation system including: a global navigation satellite subsystem, an inertial navigation subsystem, an inertial sensor or multiple inertial sensors and a processor; the processor being responsive to signals output by said global navigation satellite subsystem and the inertial navigation subsystem to implement a navigation mode discrimination routine for selecting one of a pedestrian navigation mode or a road navigation mode; wherein said mode discrimination includes a sampler to sample the frequency of excitations of the inertial sensor, a low band filter and a high band filter to filter the frequency sample to a low frequency band sample and a high frequency band sample, a calculator module responsive to each of said low frequency band sample and said high frequency band sample to calculate a low band power spectral density and a high band power spectral density; a comparator able to compare the low band power spectral density and the high band power spectral density and to generate a mode selection signal; and the global navigation satellite subsystem adapted to respond to the mode selection signal to select one of the navigation modes. By the term "portable" it is meant a man portable device and by the term "communication device" we refer to any device including an antenna.

Various aspects of this disclosure provide a navigation process implemented in a portable mobile device including: executing a global navigation satellite routine and an inertial navigation routine, said inertial navigation routine being responsive to signals output from an inertial sensor or multiple inertial sensors; sampling the frequency of excitations of the inertial sensor; filtering the frequency sample to a low frequency band and a high frequency band; calculating the power spectral density of the low frequency band and the high frequency band; comparing the power spectral density of the low frequency band and the high frequency band; and selecting a navigation mode according to the comparison of the power spectral density of the low frequency band and the high frequency band.

According to a further aspect of this disclosure, there is provided code adapted for communication via large area network, WiFi, cell phone network or recorded on physical media for execution in a processor in a portable device to implement the process according to various aspects of this disclosure.

Various aspects of this disclosure relies on the discovery that the frequency of excitations of an inertial sensor carried by a pedestrian, including stationary manipulations of the device, occur typically at a frequency of less than ten hertz, and usually well below ten hertz. An inertial sensor conveyed in a device travelling in a vehicle in road mode senses excitations at a frequency typically below twenty five hertz. Such road mode inertial excitations are typically induced by vehicle engine motion, road condition, air-conditioning activity, windscreen wiper activity. Evidently from this, a predominance of excitations in a low frequency band, corresponding to the pedestrian mode, will indicate pedestrian mode navigation. Conversely a predominance of excitations in a high frequency band is indicative of road mode navigation. In general, the comparator outputs a signal indicative of pedestrian mode navigation when the low frequency band power spectral density exceeds the high frequency band power spectral density. Conversely the comparator outputs a signal indicative of road mode navigation when the high frequency band power spectral density exceeds the low frequency band power spectral density. However, as explained more detailed later, dominance may be determined by more complex criteria, to address a condition where each band signal strength is low or there is not much difference. In this condition the dominant frequency band power spectral density may not be the highest frequency band power spectral density.

For example, the low frequency band is between two and ten hertz and the high frequency band is between ten and twenty five hertz.

Various aspects of this disclosure also contemplate the possibility of a condition where the power spectral densities of each of the low and high frequency bands are both strongly present. This condition may occur where a vehicle passenger or driver is manipulating the device in a slow, or erratically moving vehicle or a vehicle stationary in traffic. In this condition the difference between the low frequency power spectral density and the high frequency power spectral density may be small. The dominant power spectral density may change frequently. Consequently, the mode signal output from the comparator may change frequently over a short time leading to frequent and confusing changes in navigation mode. To avoid this problem the system and process is set so that the comparison of the power spectral densities may only occur if the low band power spectral density exceeds a predetermined threshold value.

The comparing may include the calculation of a power spectral density ratio of the low band power spectral density and the high band power spectral density. The system will preferably determine pedestrian mode where:
a. the low band power density spectrum exceeds a first low band power density spectrum threshold and
b. if the power spectral density ratio exceeds a higher power spectral density threshold ratio; or
c. the low band power density spectrum exceeds a second low band power spectral density threshold, higher than the first low band power spectral density threshold and
d. the power spectral density ratio exceeds a lower power spectral density threshold ratio.

For example, the higher power spectral density threshold ratio is between 1 and 2, and more preferably 1.5. For example, the second low band power spectral density threshold is at least 1.5 times the size of the first low band power spectral density threshold and more preferably twice the size of the first low band power spectral density threshold. For example, the lower power spectral density threshold ratio is between 0.5 and 1 and more preferably 0.75.

It will be understood that the thresholds as described above may be determined by learning, for example using a neural network, or by any other suitable method. Both the absolute as the relative thresholds could be either preconfigured or determined through a learning process or preconfigured and adaptively fine-tuned through using e.g. a neural network or adaptive filters. This learning process could be achieved by getting an independent information about the travel mode. For example, the user may indicate through a control interface, such as a GUI (graphical user interface) the travel mode (pedestrian or road, including specification of submodes i.e. pedestrian walking, pedestrian running, ...). Other independent sources e.g. derived from device usage, traveled roads (as will be explained below) or whether the device is mounted on a dashboard may also be utilized. Simultaneously the power spectral densities of the different bands are assessed and averaged during the learning period, after which a routine could be used to establish the most appropriate thresholds, making optimal use of the headroom in power spectral densities and power spectral density ratios between the combined sets of power spectral densities and power spectral density ratios obtained for the different learned travel modes. As in the preconfigured set of threshold parameters the determination of threshold parameters through learning should include a level of hysteresis for algorithmic robustness reasons.

Conditions (a) and (b) indicate that the pedestrian is walking. Conditions (c) and (d) indicate that the pedestrian is running.

Under the conditions expressed in the immediately preceding paragraph the navigation mode may be instantly switched. However, a delay timer may be provided to delay cancellation of the pedestrian mode, and consequent switching to the road mode. The delay timer may be implemented when the low frequency band power spectral density falls briefly below a large fraction of the first low frequency band power spectral density threshold, but continues to exceed the high frequency band power spectral density. The large fraction may be 80% of the threshold at (a). The timer may be provided by a countdown timer which may count down from a preset timer value which may be 512 (the period assumed here may be 20 ms (based on a sampling rate of 50 Hz)). The counter may be decremented by one for each sequential cycle of the process that the low band power spectral density remains at less than 80% of the threshold value. When the threshold power density spectrum value is exceeded the timer may be reset, preferably by resetting the countdown timer to its initial value, for example 512.

Various aspects of this disclosure provide a means of distinguishing between pedestrian and road navigation modes where simple speed or position and map snapping are unreliable. The device and process may distinguish between the user manipulating a device while walking and the user manipulating the device while in a car. The device and process may distinguish between distinguish between a pedestrian carrying and manipulating the device while walking at low speed and a device fixed in a road vehicle travelling at low speed or stationary in congested traffic. The load on the device processor imposed by the execution of the process is constant (the underlying reason may be that power spectral densities are calculated based on a sliding FFT (fast Fourier transform)).

In an aspect of this disclosure, a cell phone or similar portable device includes a global navigation satellite subsystem and an inertial navigation subsystem responsive to an inertial sensor. The inertial sensor is used in a navigation mode discrimination routine to sample the frequency of inertial disturbances of the device and the sampled frequencies are processed to determine if the device is being carried by a pedestrian or carried in a vehicle. By reliably determining the mode of transport, erroneous navigation can be avoided.

In an aspect of this disclosure, a portable device including a navigation system may include: a global navigation satellite subsystem, an inertial navigation subsystem, an inertial sensor and a processor; the processor being responsive to signals output by said global navigation satellite subsystem and said inertial navigation subsystem to implement a navigation mode discrimination system for selecting one of a pedestrian navigation mode or a road navigation mode; wherein said navigation mode discrimination system is arranged to sample the frequency of excitations of the inertial sensor (6) and determine one of the navigation modes based on the frequency of excitations of said inertial sensor (6).

In an aspect of this disclosure, the device may include: a sampler to sample the frequency of excitations of the inertial sensor; a low band filter and a high band filter for filtering the inertial frequency sample to a low frequency band sample and a high frequency band sample; a calculator module responsive to each of said low frequency band sample and said high frequency band sample for calculating a low frequency band power spectral density and a high frequency band power spectral density; a comparator configured to compare the low frequency band power spectral density and the high frequency band power spectral density to generate a mode selection signal; and the global navigation satellite subsystem being responsive to the mode selection signal to select one of the navigation modes.

In an aspect of this disclosure, the low frequency band filter may be adapted to filter a low frequency band selected to isolate excitations arising when the device is carried by a pedestrian and the high frequency band filter may be adapted to filter a high frequency band to isolate excitations experienced by the device carried in a motor vehicle.

In an aspect of this disclosure, the low frequency band filter may be adapted to filter a frequency band between 2Hz and 10Hz and the high frequency band filter is adapted to filter a frequency band between 10Hz and 25Hz.

In an aspect of this disclosure, a comparator may be arranged to compare the low frequency power spectral density with a first predetermined threshold and where the device is configured to select the road navigation mode when the low frequency power spectral density is smaller than said first threshold.

In an aspect of this disclosure, a comparator may be arranged to compare the low frequency spectral density with a second predetermined threshold larger than the first threshold, a calculator to calculate a ratio of the low frequency band power spectral density and the high frequency band power spectral density to generate a power spectral density ratio; and a comparator arranged to compare the power spectral density ratio with a high power spectral density ratio threshold; wherein the system may be arranged to generate the mode selection signal to select the pedestrian navigation mode when the low frequency spectral density is between the first threshold and the second threshold and the power spectral density ratio exceeds the high spectral density ratio threshold; and the road navigation mode when the power spectral density ratio is less than the high power spectral density ratio.

In an aspect of this disclosure, the system may be arranged so that when: the low frequency spectral density exceeds the second threshold, and the power spectral density ratio is greater than a lower spectral density ratio threshold, the mode selection signal is generated to select the pedestrian navigation mode; and the low frequency spectral density exceeds the second threshold, and the power spectral density ratio is less than the lower spectral density ratio threshold the mode selection signal is generated to select the road navigation mode.

In an aspect of this disclosure, a timer may be set to delay a switch from the pedestrian navigation mode to the road navigation mode when the mode discrimination routine responds to the inertial frequency sample to implement a change from the pedestrian navigation mode to the road navigation mode.

In an aspect of this disclosure, the device may be a communication device.

In an aspect of this disclosure, a navigation process implemented in a portable device having an inertial sensor or multiple inertial sensors (6) may include: executing a global navigation satellite routine and an inertial navigation routine, said inertial navigation routine responsive to signals output from the inertial sensor, and including: a navigation mode discrimination routine may include sampling the frequency of excitations of the inertial sensor, and processing the inertial frequency sample to determine a pedestrian navigation mode or a road navigation mode.

In an aspect of this disclosure, the navigation process may include: filtering the frequency sample to isolate a low frequency band and a high frequency band: calculating the power spectral density of the low frequency band and the high frequency band; comparing the power spectral density of the low frequency band and the high frequency band and; selecting the navigation mode according to the comparison of the power spectral density of the low frequency band and the high frequency band.

In an aspect of this disclosure, the low frequency band may isolate excitations arising when the device is carried by a pedestrian, and the high frequency band may isolate excitations experienced as a consequence of the device being carried in a motor vehicle.

In an aspect of this disclosure, the low frequency band may be in the range 2Hz to 10Hz and the high frequency band may be in the range from 10 Hz to 25 Hz.

In an aspect of this disclosure, the process may further include selecting the road navigation mode when the low frequency spectral density is lower than a predetermined first threshold.

In an aspect of this disclosure, the process may include: calculating a ratio of the low frequency band power spectral density to the high frequency band power spectral density to generate a power spectral density ratio; selecting the pedestrian navigation mode when the low frequency band power spectral density is between the first and second thresholds and the power spectral density ratio is greater than a high spectral density ratio threshold; and selecting a road navigation mode when the low frequency power spectral density is between the first and second thresholds and the power spectral density ratio is less than the high power spectral density ratio threshold.

In an aspect of this disclosure, a process (for example the process described above) may be a process of selecting pedestrian navigation mode when the low frequency spectral density exceeds the second threshold, and the power spectral density ratio is greater than a lower power spectral density ratio threshold; and of selecting road navigation mode when the low frequency spectral density exceeds the second threshold, and the power spectral density ratio is less than the lower power spectral density ratio threshold.

In an aspect of this disclosure, when the discrimination routine selects the road navigation mode from the pedestrian navigation mode the implementation of said road navigation mode may be delayed by a timer.

In an aspect of this disclosure, the process may be implemented in a communication device.

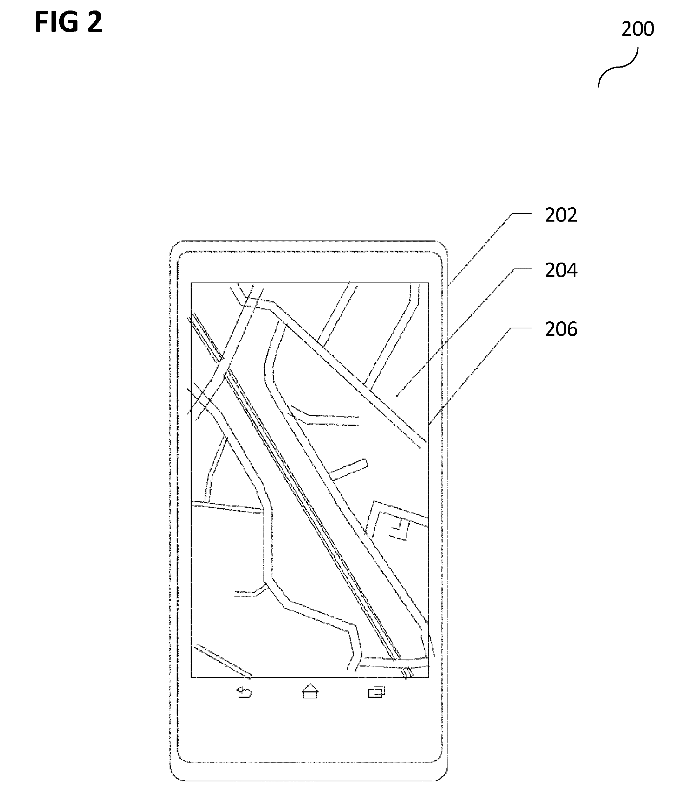

Figure 2 shows a device 200 in the form of a cell phone 202 while executing a global navigation satellite application resulting in the display of a relevant map 204 on a touch screen 206.

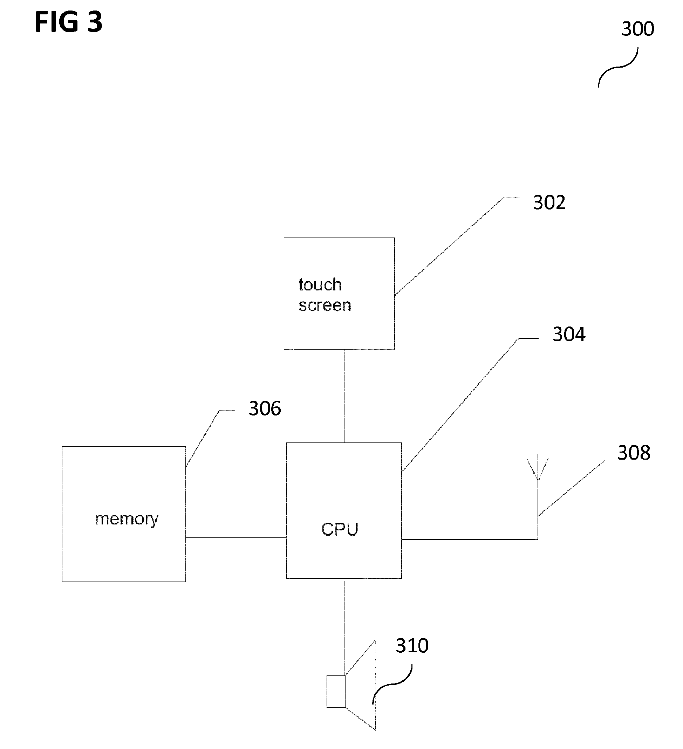

As is diagrammatically illustrated in Figure 3, the cell phone 300 incorporates a processor 304 arranged to process data supplied from the touch screen 302 or received from an antenna 308 in accordance with instructions executing from machine readable code recorded in a memory 306. The cell phone 300 may further include a speaker 310. As is well known, the cell phone 202 (shown in Figure 2) or 300 may interface with the user via the touch screen to receive instructions and to display the instant location of the cell phone and a route to a destination to which the user wishes to navigate. The route may include roads from which pedestrians are excluded and footpaths from which vehicular traffic is excluded. To optimize the route it is therefore important that the cell phone 1 selects the route for navigation in accordance with the mode of travel, in this case the modes are pedestrian or road modes.

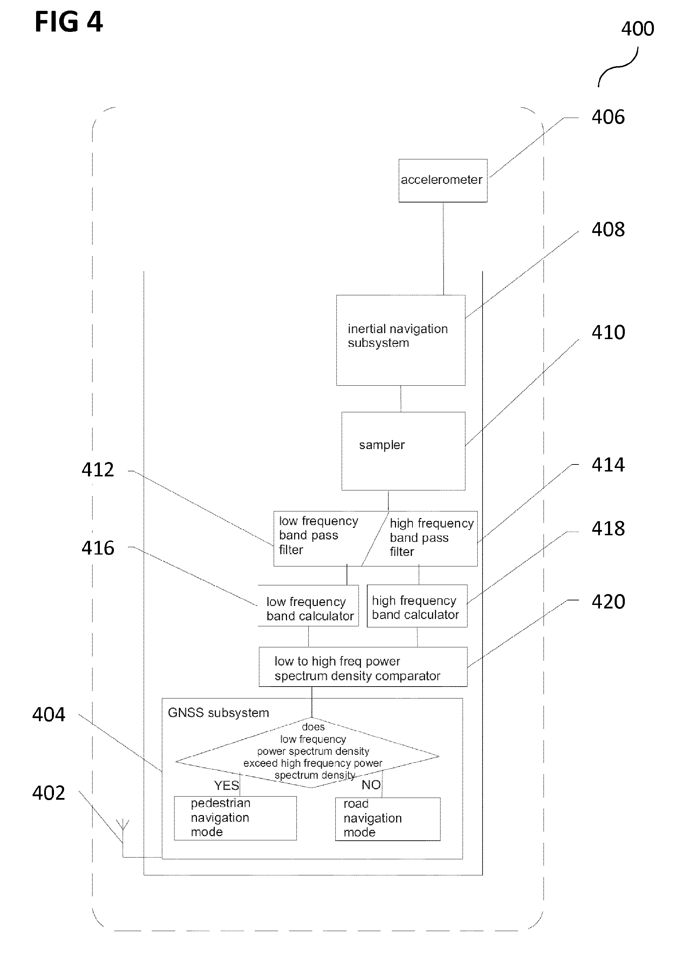

As shown diagrammatically in Figure 4 the cell phone 202 may include a global positioning system (GPS) antenna 402 able to receive global positioning system radio GPS signals from satellites in known fashion. The GPS signals are delivered to a global navigation satellite subsystem (GNSS) 404.

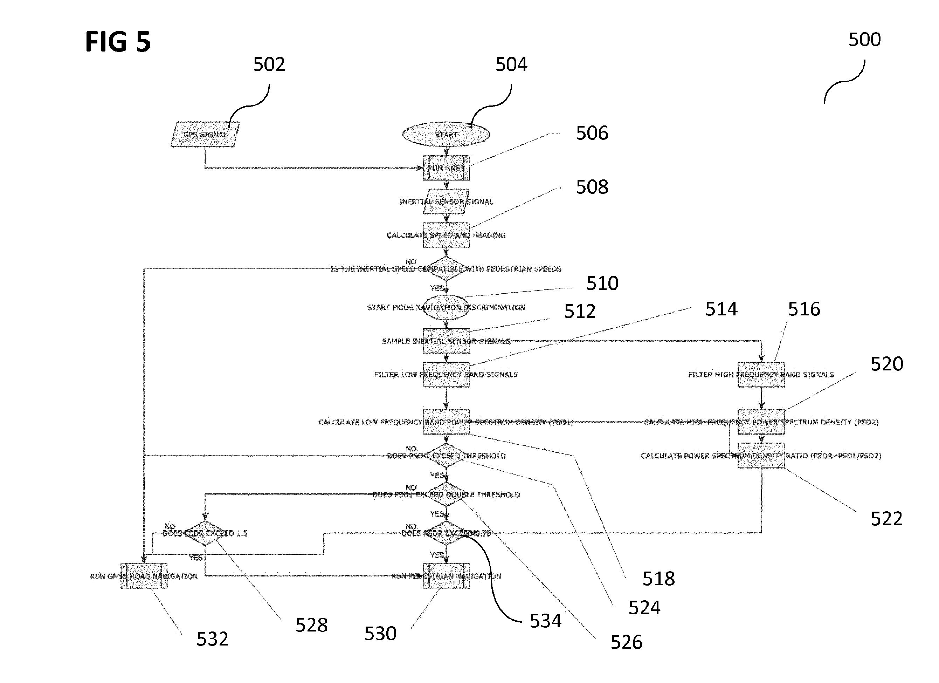

Processing of the cell phone 202 will be described with respect to Figure 5, in which processing starts at 504, and a GPS signal 502 may be input.

An inertial sensor in the form of an accelerometer 406 (or gyroscope or a combination of both) may be included in cell phone 202 which is sensitive to accelerations of the cell phone 202. When the GNSS is initiated as at 506, signals from the inertial sensor may be processed by an inertial navigation subsystem 408 and used to calculate the speed and heading of the cell phone at 508. If the speed calculated from the inertial sensor is incompatible with a pedestrian speed for example a speed in excess of 21km/h, the cell phone may implement a road navigation mode in GNSS 404. However, if the speed calculated at 508 is a possible pedestrian speed the process implements a navigation mode discrimination routine at 510.

The mode discrimination routine may sample the frequency of excitations of the inertial sensor 406 at sampler 410 at 512 and may filter sample through low band pass filter 414 and high band pass filter 414 at 514 and 516 respectively. The low band pass filter may filter signals between 2Hz and 10Hz while the high band pass filter may filter between 10 Hz and 25 Hz. The low band signal may be supplied to a low frequency band calculator 416 which may calculate the low frequency band power spectral density (PSD1) at 518.

The high frequency band signal may be used by calculator 418 at 520 to calculate a high frequency band power spectral density (PSD2). At 522, a calculator may calculate the ratio of the low frequency power spectral density (PSD1) to the high frequency power spectral density (PSD2) to generate the power spectral density ratio (PSDR). For example, the calculator may generate a navigation mode selection signal based solely on whether or not the PSDR is greater than or less than one. If the PSDR is greater than one, the low frequency excitations are dominant and the pedestrian mode should be selected. If the PSDR is less than one, the high frequency excitations are dominant and the road navigation mode is selected. However, this may not deal well with situations where each signal is weak or the power spectral densities are close in value.

To address the aforementioned problem, the process may go to 524 where the low frequency band power spectral density is compared with a first threshold. If the low frequency power spectral density is less than the first threshold value, the process generates a navigation mode selection signal causing selection of the road mode for navigation.

If at 524 the low frequency band power spectral density exceeds the first threshold, then at 526 the low frequency band power spectral density is compared to a second threshold, which in this case is the double threshold at 526. The term "double threshold" is used to indicate the value of the first threshold multiplied by a factor 2.

If the second threshold is not exceeded, the power spectral density ratio is compared to a high spectral density ratio threshold in 528. In this case the high spectral density ratio threshold is 1.5 times the value of the first threshold to determine if the low frequency excitations are dominant. Thus if the low frequency band spectral density is one and one half times the high frequency band spectral density the system and process determines that the device is being carried by a pedestrian. The pedestrian mode selection signal is generated accordingly and the GNSS subsystem responds to implement a pedestrian navigation mode at 530.

If the second threshold is exceeded at 526, 534 compares the power spectral density ratio to a lower power spectral density threshold ratio. For example, the lower power spectral density ratio threshold may be 0.75. If the lower power spectral density ratio threshold is not exceeded, the process goes to 532 where a road mode selection signal is generated and the GNSS responds to implement road navigation. If the lower power spectral density ratio threshold is exceeded, the process causes the system to generate a pedestrian mode selection signal which causes the GNSS subsystem to implement the pedestrian navigation mode at 530.

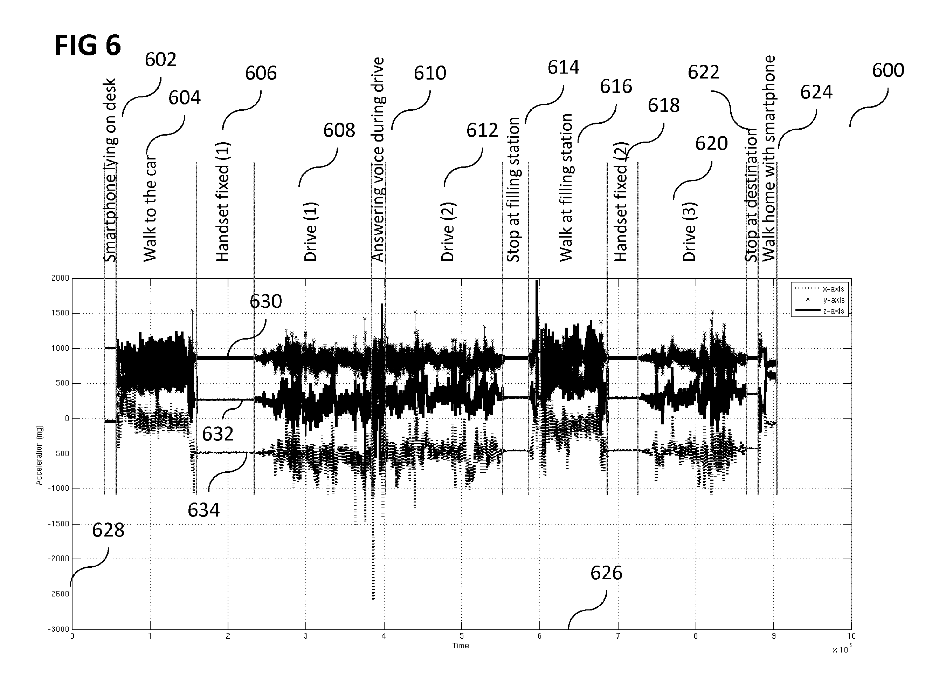

Figure 6 is a chart 600 of an inertial sensor excitation sample taken during a combined pedestrian and road navigation with time plotted on the X axis (horizontal axis) increasing from left to right and the excitations in low and high frequency bands plotted on the Y axis (vertical axis). The devices lies on a desk during period 602. A user of the device walks to a car during period 604, and fixes the handset in 606, drives in 608, performs a voice call during driving in 610, continues driving in 612, stops in 614, is at a filling station in 616, fixes the devices in 618, drives in 620, picks the device to go home in 622, and walks home in 624, like will be described in more detail below. A horizontal axis indicates time, and a vertical axis 628 indicates acceleration (expressed in mg). Three lines show the excitations of the accelerometer along its native 3 axes. A dotted line 634 indicates the x-axis, a dashed line with crosses 630 indicates the y-axis, and a solid line without crosses 632 indicates the z-axis.

Figure 7 shows an illustration 700 of the power spectral density plotted on the Y axis (vertical axis 704) with time on the X axis (horizontal axis 702) in the upper graph in Figure 7. A PSD2 value (corresponding to high frequency power spectral density, as described above is illustrated by a solid line706, and a PSD1 value (corresponding to low frequency power spectral density, as described above) is illustrated by a dotted line 710. For example, PSD1 may correspond to the frequency band between 2 and 10 Hz, and PSD2 may correspond to the frequency band between 10 and 25 Hz. A state is illustrated by a dashed line 708, wherein 0 means road state, 1000 means pedestrian state, and 500 means unknown state. In the lower graph in Figure 7, the vertical axis 712 indicates a counter value, and a counter value (illustrated by a solid line 714) over time (as indicated by the horizontal axis 702) is illustrated. The counter value may correspond to the delay timer as described above. In the first period P1 (602) the cell phone is lying on a desk and is immobile. Little or no excitation of either low or high frequency band is detected. In the subsequent period P2 (604), the cell phone 202 is carried to the car by a walking user. In Figure 7, the power spectral density of the low frequency band greatly exceeds the high frequency band power spectral density indicative of pedestrian travel, if GNSS navigation was activated, pedestrian mode would readily be identified and selected by the process. In the subsequent period 3 (606), the user fixes the cell phone into a dashboard mounting. The recording shows each of low and high frequency excitations in relatively similar amounts as the cell phone is manipulated. However, the criteria at 524 requiring the low frequency power spectral density to exceed a minimum threshold to stop pedestrian mode selection, results in road mode selection although the high frequency power spectral density is lower than the low frequency power spectral density in the third period.

During the fourth period P4 (608), the vehicle engine is started and the vehicle driven away. The high frequency power spectral density rises quickly to greatly exceed the low frequency power spectral density ensuring that at any speed, road mode navigation is selected. During road mode navigation, frequent rapid changes of heading are blocked in the GNSS.

During the fifth period P5 (610), the cell phone is handled by the user picking up a cell phone call. As shown in Figure 6, this results in considerable excitation in the high frequency band which can include rapid changes of direction unconnected with the overall motion of the vehicle. However, the high frequency power spectral density remains dominant in Figure 7 and no change of navigation mode will occur. As before, maintenance of the road navigation mode blocks rapid changes in heading in the GNSS.

The sixth period P6 (612) is substantially similar to the fourth period of driving. During the seventh period P7 (614), the vehicle comes to a halt at a fuel station and the user exits the vehicle during eighth period P8 (616) and undertakes pedestrian activities. The low frequency power spectral density is clearly dominant over the high frequency power spectral density and the cell phone would switch to pedestrian mode navigation.

The ninth period P9 (618) activity is essentially similar to the third period P3 (606) as the user returns to the vehicle, remounts the cell phone and drives away at period P10 (620). At the 11^{th} period P11 (622) the driver stops the vehicle, removes the cell phone from the mount and walks away (in 624). The low frequency power spectral density rises to dominate the high frequency power spectral density and the cell phone switches to pedestrian navigation mode.

It will be appreciated by the skilled person that cell phones, personal digital assistants and dedicated man portable global navigation satellite system devices commonly incorporate an inertial sensor and can therefore be adapted to implement the components and process described above by loading and/or updating code to execute in a processor of the device. The code to implement the process may be loaded onto device memory via a USB port, bluetooth, WiFi, GSM or other compatible technologies for recordal in a device memory and execution on the device processor.

The following examples pertain to further embodiments.

Example 1 is a travel mode determination device comprising: an inertial sensor; a first filter configured to filter a first frequency band of the inertial sensor; a second filter configured to filter a second frequency band of the inertial sensor; a comparator configured to compare a power spectral density of the first filter with a power spectral density of the second filter; and a travel mode determination circuit configured to determine a travel mode of the travel mode determination device based on the comparator.

In example 2, the subject-matter of example 1 can optionally include that the first frequency band of the inertial sensor is a first frequency band of an output of the inertial sensor; that the second frequency band of the inertial sensor is a second frequency band of an output of the inertial sensor; that the power spectral density of the first filter is a power spectral density of an output of the first filter; that the power spectral density of the second filter is a power spectral density of an output of the second filter; and that the travel mode determination circuit is configured to determine the travel mode of the travel mode determination device based on an output of the comparator.

In example 3, the subject-matter of example 1 or 2 can optionally include at least one further inertial sensor.

In example 4, the subject-matter of any one of examples 1 to 3 can optionally include that the inertial sensor comprises at least one sensor selected from a list of sensors consisting of: an accelerometer; a one-axis accelerometer; a two-axes accelerometer; a three-axes accelerometer; a gyroscope; a one-axis gyroscope; a two-axes gyroscope; a three-axes gyroscope; and any combination thereof.

In example 5, the subject-matter of any one of examples 1 to 4 can optionally include that the travel mode comprises at least one travel mode selected from a list of travel modes consisting of: walking; driving; using a car with a Diesel engine; using a car with a petrol engine; using a car with a gas engine; using an electrical car; using an electrical car in motion; using a bicycle; using a bicycle in motion; using a road of good quality; using a deteriorated road; using a bus; using a train; using a ship; using an airplane; a pedestrian navigation mode; and a road navigation mode.

In example 6, the subject-matter of any one of examples 1 to 5 can optionally include that the comparator is configured to determine a ratio of the power spectral density of the first filter and the power spectral density of the second filter; and that the travel mode determination circuit is configured to determine the travel mode based on the ratio.

In example 7, the subject-matter of example 6 can optionally include that the travel mode determination circuit is further configured to determine the travel mode based on whether the ratio fulfils a pre-determined criterion.

In example 8, the subject-matter of example 7 can optionally include that the pre-determined criterion is based on a pre-determined threshold.

In example 9, the subject-matter of example 8 can optionally include that the pre-determined threshold is determined using a learning method.

In example 10, the subject-matter of any one of examples 1 to 9 can optionally include that the first filter comprises a filter circuit using a first set of filter parameters; and that the second filter comprises the filter circuit using a second set of filter parameters.

In example 11, the subject-matter of any one of examples 1 to 10 can optionally include that the first frequency band is a low frequency band.

In example 12, the subject-matter of any one of examples 1 to 11 can optionally include that the second frequency band is a high frequency band.

In example 13, the subject-matter of any one of examples 1 to 12 can optionally include that the first frequency band is a low frequency band; and that the second frequency band is a high frequency band.

In example 14, the subject-matter of example 13 can optionally include that the first filter is configured to filter a low frequency band selected to isolate excitations arising when the travel mode determination device is carried by a pedestrian and the second filter is configured to filter a high frequency band to isolate excitations experienced by the travel mode determination device carried in a motor vehicle.

In example 15, the subject-matter of example 13 or 14 can optionally include that the first filter is configured to filter a frequency band between 2Hz and 10Hz and the second filter is configured to filter a frequency band between 10Hz and 25Hz.

In example 16, the subject-matter of any one of examples 13 to 15 can optionally include that the comparator is configured to compare a low frequency power spectral density with a first predetermined threshold and where the travel mode determination device is configured to select a road navigation mode when the low frequency power spectral density is smaller than said first threshold.

In example 17, the subject-matter of example 16 can optionally include that the comparator is configured to compare the low frequency spectral density with a second predetermined threshold larger than the first threshold, and that the travel mode determination device further comprises a calculator configured to calculate a ratio of the low frequency band power spectral density and the high frequency band power spectral density to generate a power spectral density ratio; and a comparator arranged to compare the power spectral density ratio with a high power spectral density ratio threshold; and that the travel mode determination device is configured to generate the mode selection signal to select the pedestrian navigation mode when the low frequency spectral density is between the first threshold and the second threshold and the power spectral density ratio exceeds the high spectral density ratio threshold; and that the travel mode determination device is configured to generate the mode selection signal to select the road navigation mode when the power spectral density ratio is less than the high power spectral density ratio.

In example 18, the subject-matter of example 17 can optionally include that the travel mode determination device is arranged so that: when the low frequency spectral density exceeds the second threshold, and when the power spectral density ratio is greater than a lower spectral density ratio threshold, the mode selection signal is generated to select the pedestrian navigation mode; and when the low frequency spectral density exceeds the second threshold, and when the power spectral density ratio is less than the lower spectral density ratio threshold the mode selection signal is generated to select the road navigation mode.

In example 19, the subject-matter of any one of examples 13 to 18 can optionally include that a timer is set to delay a switch from the pedestrian navigation mode to the road navigation mode when the mode discrimination routine responds to the inertial frequency sample to implement a change from the pedestrian navigation mode to the road navigation mode.

In example 20, the subject-matter of any one of examples 1 to 18 can optionally include a further filter configured to filter a further frequency band of the inertial sensor; wherein the comparator is configured to compare a power spectral density of the further filter with a at least one of the power spectral density of the first filter or the power spectral density of the second filter.

In example 21, the subject-matter of example 20 can optionally further include that the further frequency band of the inertial sensor is a further frequency band of the output of the inertial sensor; and that that the power spectral density of the further filter is a power spectral density of an output of the further filter.

In example 22, the subject-matter of any one of examples 1 to 20 can optionally include that the travel mode determination circuit is further configured to determine the travel mode further based on at least one of the power spectral density of the first filter or the power spectral density of the second filter.

In example 23, the subject-matter of example 22 can optionally include that the travel mode determination circuit is further configured to determine the travel mode based on at least one of whether the power spectral density of the first filter fulfils a pre-determined criterion or whether the power spectral density of the second filter fulfils a pre-determined criterion.

In example 24, the subject-matter of example 23 can optionally include that the pre-determined criterion is based on a pre-determined threshold.

In example 25, the subject-matter of example 24 can optionally include that the pre-determined threshold is determined using a learning method.

In example 26, the subject-matter of any one of examples 1 to 25 can optionally include that the travel mode determination circuit is further configured to determine the travel mode further based on at least one of a speed of the travel mode determination device, an altitude of the travel mode determination device, a brightness of the surrounding of the travel mode determination device, a loudness of the surrounding of the travel mode determination device.

Example 27 is a navigation system comprising the travel mode determination device of any one of examples 1 to 26, wherein the navigation system is configured to determine an operation mode based on the determined travel mode.

Example 28 is a mobile radio communication device comprising the travel mode determination device of any one of examples 1 to 26, wherein the mobile radio communication device is configured to determine an operation mode based on the determined travel mode.

Example 29 is a portable device including a navigation system and the travel mode determination device of any one of examples 1 to 26, the portable device further comprising: a global navigation satellite subsystem, an inertial navigation subsystem, and a processor; the processor being responsive to signals output by said global navigation satellite subsystem and said inertial navigation subsystem to implement a navigation mode discrimination system for a mode of navigation; wherein said navigation mode discrimination system is arranged to sample the frequency of excitations of signals output from the inertial sensor and determine one of the navigation modes based on the frequency of excitations of said inertial sensor.

In example 30, the subject-matter of example 29 can optionally include: a sampler to sample the frequency of excitations of signals from the inertial sensor; a low band filter and a high band filter configured to filter the inertial frequency sample to a low frequency band sample and a high frequency band sample, a calculator module responsive to each of said low frequency band sample and said high frequency band sample configured to calculate a low frequency band power spectral density and a high frequency band power spectral density; a comparator configured to compare the low frequency band power spectral density and the high frequency band power spectral density to generate a mode selection signal; and the global navigation satellite subsystem being responsive to the mode selection signal to select one of the navigation modes.

In example 31, the subject-matter of example 29 or 30 can optionally include that the low frequency band filter is adapted to filter a low frequency band selected to isolate excitations arising when the device is carried by a pedestrian and the high frequency band filter is adapted to filter a high frequency band to isolate excitations experienced by the device carried in a motor vehicle.

In example 32, the subject-matter of example 31 can optionally include that the low frequency band filter is adapted to filter a frequency band between 2Hz and 10Hz and the high frequency band filter is adapted to filter a frequency band between 10Hz and 25Hz.

In example 33, the subject-matter of any one of examples 30 to 32 can optionally include that a comparator is arranged to compare the low frequency power spectral density with a first predetermined threshold and where the device is configured to select the road navigation mode when the low frequency power spectral density is smaller than said first threshold.

In example 34, the subject-matter of example 33 can optionally include that a comparator is arranged to compare the low frequency spectral density with a second predetermined threshold larger than the first threshold, a calculator to calculate a ratio of the low frequency band power spectral density and the high frequency band power spectral density to generate a power spectral density ratio; and a comparator arranged to compare the power spectral density ratio with a high power spectral density ratio threshold; wherein the system is arranged to generate the mode selection signal to select the pedestrian navigation mode when the low frequency spectral density is between the first threshold and the second threshold and the power spectral density ratio exceeds the high spectral density ratio threshold; and the road navigation mode when the power spectral density ratio is less than the high power spectral density ratio.

In example 35, the subject-matter of example 34 can optionally include that the system is arranged so that when: the low frequency spectral density exceeds the second threshold, and the power spectral density ratio is greater than a lower spectral density ratio threshold, the mode selection signal is generated to select the pedestrian navigation mode; and the low frequency spectral density exceeds the second threshold, and the power spectral density ratio is less than the lower spectral density ratio threshold the mode selection signal is generated to select the road navigation mode.

In example 36, the subject-matter of any one of examples 29 to 35 can optionally include that a timer is set to delay a switch from the pedestrian navigation mode to the road navigation mode when the mode discrimination routine responds to the inertial frequency sample to implement a change from the pedestrian navigation mode to the road navigation mode.

In example 37, the subject-matter of any one of examples 29 to 36 can optionally include that the device is a communication device.

Example 38 is a method for controlling a travel mode determination device comprising: acquiring a signal from an inertial sensor; filtering a first frequency band of the signal; filtering a second frequency band of the signal; comparing a power spectral density of filtering the first frequency band with a power spectral density of filtering the second frequency band; and determining a travel mode of the travel mode determination device based on the comparing.

In example 39, the subject-matter of example 38 can optionally include that the power spectral density of filtering the first frequency band is a power spectral density of an output of filtering the first frequency band; and that the power spectral density of filtering the second frequency band is a power spectral density of an output of filtering the second frequency band.

In example 40, the subject-matter of example 38 or 39 can optionally include acquiring signals from at least one further inertial sensor.

In example 41, the subject-matter of any one of examples 38 to 40 can optionally include that the inertial sensor comprises at least one sensor selected from a list of sensors consisting of: an accelerometer; a one-axis accelerometer; a two-axes accelerometer; a three-axes accelerometer; a gyroscope; a one-axis gyroscope; a two-axes gyroscope; a three-axes gyroscope; and any combination thereof.

In example 42, the subject-matter of any one of examples 38 to 41 can optionally include that the travel mode comprises at least one travel mode selected from a list of travel modes consisting of: walking; driving; using a car with a Diesel engine; using a car with a petrol engine; using a car with a gas engine; using an electrical car; using an electrical car in motion; using a bicycle; using a bicycle in motion; using a road of good quality; using a deteriorated road; using a bus; using a train; using a ship; using an airplane; a pedestrian navigation mode; and a road navigation mode.

In example 43, the subject-matter of any one of examples 38 to 42 can optionally include: determining a ratio of the power spectral density of filtering the first frequency band and the power spectral density of filtering the second frequency band; and determining the travel mode based on the ratio.

In example 44, the subject-matter of example 43 can optionally include: determining the travel mode based on whether the ratio fulfils a pre-determined criterion.

In example 45, the subject-matter of example 44 can optionally include that the pre-determined criterion is based on a pre-determined threshold.

In example 46, the subject-matter of example 45 can optionally include that the pre-determined threshold is determined using a learning method.

In example 47, the subject-matter of any one of examples 38 to 46 can optionally include that filtering the first frequency band is done using a first set of filter parameters; and that filtering the second frequency band is done using a second set of filter parameters.

In example 48, the subject-matter of any one of examples 38 to 47 can optionally include that the first frequency band is a low frequency band.

In example 49, the subject-matter of any one of examples 38 to 48 can optionally include that the second frequency band is a high frequency band;

In example 50, the subject-matter of any one of examples 38 to 49 can optionally include that the first frequency band is a low frequency band; and that the second frequency band is a high frequency band;

In example 51, the subject-matter of example 50 can optionally include that filtering the first frequency band comprises filtering a low frequency band selected to isolate excitations arising when the travel mode determination device is carried by a pedestrian and the second filtering is configured to filter a high frequency band to isolate excitations experienced by the travel mode determination device carried in a motor vehicle.

In example 52, the subject-matter of example 50 or 51 can optionally include that the first frequency band comprises a frequency band between 2Hz and 10Hz and the second frequency band comprises a frequency band between 10Hz and 25Hz.

In example 53, the subject-matter of any one of examples 50 to 52 can optionally include: comparing a low frequency power spectral density with a first predetermined threshold; and selecting a road navigation mode when the low frequency power spectral density is smaller than said first threshold.

In example 54, the subject-matter of example 53 can optionally include: comparing the low frequency spectral density with a second predetermined threshold larger than the first threshold; calculating a ratio of the low frequency band power spectral density and the high frequency band power spectral density to generate a power spectral density ratio; and comparing the power spectral density ratio with a high power spectral density ratio threshold; generating the mode selection signal to select the pedestrian navigation mode when the low frequency spectral density is between the first threshold and the second threshold and the power spectral density ratio exceeds the high spectral density ratio threshold; and generating the mode selection signal to select the road navigation mode when the power spectral density ratio is less than the high power spectral density ratio.

In example 55, the subject-matter of example 54 can optionally include that when the low frequency spectral density exceeds the second threshold, and when the power spectral density ratio is greater than a lower spectral density ratio threshold, the mode selection signal is generated to select the pedestrian navigation mode; and when the low frequency spectral density exceeds the second threshold, and when the power spectral density ratio is less than the lower spectral density ratio threshold the mode selection signal is generated to select the road navigation mode.

In example 56, the subject-matter of any one of examples 50 to 55 can optionally include that a timer is set to delay a switch from the pedestrian navigation mode to the road navigation mode when the mode discrimination routine responds to the inertial frequency sample to implement a change from the pedestrian navigation mode to the road navigation mode.

In example 57, the subject-matter of any one of examples 38 to 56 can optionally include: filtering a further frequency band of the signal; comparing a power spectral density of filtering the further frequency band with a at least one of the power spectral density of filtering the first frequency band or the power spectral density of filtering the second frequency band.

In example 58, the subject-matter of example 57 can optionally include that the power spectral density of filtering the further frequency band is a power spectral density of an output of filtering the further frequency band.

In example 59, the subject-matter of any one of examples 38 to 58 can optionally include: determining the travel mode further based on at least one of the power spectral density of filtering the first frequency band or the power spectral density of filtering the second frequency band.

In example 60, the subject-matter of example 59 can optionally include: determining the travel mode based on at least one of whether the power spectral density of filtering the first frequency band fulfils a pre-determined criterion or whether the power spectral density of filtering the second frequency band fulfils a pre-determined criterion.

In example 61, the subject-matter of example 60 can optionally include that the pre-determined criterion is based on a pre-determined threshold.

In example 62, the subject-matter of example 61 can optionally include that the pre-determined threshold is determined using a learning method.

In example 63, the subject-matter of any one of examples 38 to 62 can optionally include: determining the travel mode further based on at least one of a speed of the travel mode determination device, an altitude of the travel mode determination device, a brightness of the surrounding of the travel mode determination device, a loudness of the surrounding of the travel mode determination device.

Example 64 is a method for controlling a navigation system comprising the method of any one of examples 38 to 63, wherein the navigation system determines an operation mode based on the determined travel mode.

Example 65 is a method for controlling a mobile radio communication device comprising the method of any one of examples 38 to 63, wherein the mobile radio communication device determines an operation mode based on the determined travel mode.

Example 66 is a navigation process implemented in a portable device having the inertial sensor comprising the method of any one of examples 38 to 63 further comprising: executing a global navigation satellite routine and an inertial navigation routine, said inertial navigation routine responsive to signals output from the inertial sensor, and including: a navigation mode discrimination routine comprising sampling the frequency of excitations of the inertial sensor, and processing the inertial frequency sample to determine a pedestrian navigation mode or a road navigation mode.

In example 67, the subject-matter of example 66 can optionally include: filtering the frequency sample to isolate a low frequency band and a high frequency band; calculating the power spectral density of the low frequency band and the high frequency band; comparing the power spectral density of the low frequency band and the high frequency band and; selecting the navigation mode according to the comparison of the power spectral density of the low frequency band and the high frequency band.

In example 68, the subject-matter of example 66 or 67 can optionally include that the low frequency band isolates excitations arising when the device is carried by a pedestrian, and the high frequency band isolates excitations experienced as a consequence of the device being carried in a motor vehicle.

In example 69, the subject-matter of example 67 or 68 can optionally include that the low frequency band is in the range 2Hz to 10Hz and the high frequency band is in the range from 10 Hz to 25 Hz.

In example 70, the subject-matter of any one of examples 67 to 69 can optionally include: selecting the road navigation mode when the low frequency spectral density is lower than a predetermined first threshold.

In example 71, the subject-matter of any one of examples 67 to 70 can optionally include: calculating a ratio of the low frequency band power spectral density to the high frequency band power spectral density to generate a power spectral density ratio; selecting the pedestrian navigation mode when the low frequency band power spectral density is between the first and second thresholds and the power spectral density ratio is greater than a high spectral density ratio threshold, and selecting a road navigation mode when the low frequency power spectral density is between the first and second thresholds and the power spectral density ratio is less than the high power spectral density ratio threshold.

In example 72, the subject-matter of any one of examples 66 to 71 can optionally be a method of selecting pedestrian navigation mode when the low frequency spectral density exceeds the second threshold, and the power spectral density ratio is greater than a lower power spectral density ratio threshold; and selecting road navigation mode when the low frequency spectral density exceeds the second threshold, and the power spectral density ratio is less than the lower power spectral density ratio threshold.

In example 73, the subject-matter of any one of examples 66 to 72 can optionally include that when the discrimination routine selects the road navigation mode from the pedestrian navigation mode the implementation of said road navigation mode is delayed by a timer.

In example 74, the subject-matter of any one of examples 66 to 73 can optionally include that it is implemented in a communication device.

Example 75 is a travel mode determination device comprising: an inertial sensor means; a first filter means for filtering a first frequency band of the inertial sensor; a second filter means for filtering a second frequency band of the inertial sensor; a comparator means for comparing a power spectral density of the first filter with a power spectral density of the second filter; and a travel mode determination means for determining a travel mode of the travel mode determination device based on the comparator.

In example 76, the subject-matter of example 75 can optionally include that the first frequency band of the inertial sensor means is a first frequency band of an output of the inertial sensor means; that the second frequency band of the inertial sensor means is a second frequency band of an output of the inertial sensor means; that the power spectral density of the first filter means is a power spectral density of an output of the first filter means; that the power spectral density of the second filter means is a power spectral density of an output of the second filter means; and that the travel mode determination means is for determining the travel mode of the travel mode determination device based on an output of the comparator means.

In example 77, the subject-matter of example 75 or 76 can optionally include: at least one further inertial sensor means.

In example 78, the subject-matter of any one of examples 75 to 77 can optionally include that the inertial sensor means comprises at least one sensor selected from a list of sensors consisting of: an accelerometer; a one-axis accelerometer; a two-axes accelerometer; a three-axes accelerometer; a gyroscope; a one-axis gyroscope; a two-axes gyroscope; a three-axes gyroscope; and any combination thereof.

In example 79, the subject-matter of any one of examples 75 to 78 can optionally include that the travel mode comprises at least one travel mode selected from a list of travel modes consisting of: walking; driving; using a car with a Diesel engine; using a car with a petrol engine; using a car with a gas engine; using an electrical car; using an electrical car in motion; using a bicycle; using a bicycle in motion; using a road of good quality; using a deteriorated road; using a bus; using a train; using a ship; using an airplane; a pedestrian navigation mode; and a road navigation mode.

In example 80, the subject-matter of any one of examples 75 to 76 can optionally include that the comparator means is for determining a ratio of the power spectral density of the first filter means and the power spectral density of the second filter means; and that the travel mode determination means is for determining the travel mode based on the ratio.

In example 81, the subject-matter of example 80 can optionally include that the travel mode determination means is further for determining the travel mode based on whether the ratio fulfils a pre-determined criterion.

In example 82, the subject-matter of example 81 can optionally include that the pre-determined criterion is based on a pre-determined threshold.

In example 83, the subject-matter of example 82 can optionally include that the pre-determined threshold is determined using a learning method.

In example 84, the subject-matter of any one of examples 75 to 83 can optionally include that that the first filter means comprises a filter circuit using a first set of filter parameters; and that the second filter means comprises the filter circuit using a second set of filter parameters.

In example 85, the subject-matter of any one of examples 75 to 84 can optionally include that the first frequency band is a low frequency band;

In example 86, the subject-matter of any one of examples 75 to 85 can optionally include that the second frequency band is a high frequency band;

In example 87, the subject-matter of any one of examples 75 to 86 can optionally include that the first frequency band is a low frequency band; and that the second frequency band is a high frequency band;

In example 88, the subject-matter of example 87 can optionally include that the first filter means is for filtering a low frequency band selected to isolate excitations arising when the travel mode determination device is carried by a pedestrian and the second filter means is for filtering a high frequency band to isolate excitations experienced by the travel mode determination device carried in a motor vehicle.

In example 89, the subject-matter of example 87 or 88 can optionally include that the first filter means is for filtering a frequency band between 2Hz and 10Hz and the second filter means is for filtering a frequency band between 10Hz and 25Hz.

In example 90, the subject-matter of any one of examples 87 to 89 can optionally include that the comparator means is for comparing a low frequency power spectral density with a first predetermined threshold and where the travel mode determination device is configured to select a road navigation mode when the low frequency power spectral density is smaller than said first threshold.

In example 91, the subject-matter of example 90 can optionally include that the comparator means is for comparing the low frequency spectral density with a second predetermined threshold larger than the first threshold, the travel mode determination device further comprising a calculator means for calculating a ratio of the low frequency band power spectral density and the high frequency band power spectral density to generate a power spectral density ratio; and a comparator means arranged for comparing the power spectral density ratio with a high power spectral density ratio threshold; wherein the travel mode determination device is configured to generate the mode selection signal to select the pedestrian navigation mode when the low frequency spectral density is between the first threshold and the second threshold and the power spectral density ratio exceeds the high spectral density ratio threshold; and wherein the travel mode determination device is configured to generate the mode selection signal to select the road navigation mode when the power spectral density ratio is less than the high power spectral density ratio.

In example 92, the subject-matter of example 91 can optionally include that the travel mode determination device is arranged so that: when the low frequency spectral density exceeds the second threshold, and when the power spectral density ratio is greater than a lower spectral density ratio threshold, the mode selection signal is generated to select the pedestrian navigation mode; and when the low frequency spectral density exceeds the second threshold, and when the power spectral density ratio is less than the lower spectral density ratio threshold the mode selection signal is generated to select the road navigation mode.

In example 93, the subject-matter of any one of examples 87 to 92 optionally include that a timer means is set to delay a switch from the pedestrian navigation mode to the road navigation mode when the mode discrimination routine responds to the inertial frequency sample to implement a change from the pedestrian navigation mode to the road navigation mode.

In example 94, the subject-matter of any one of examples 75 to 93 can optionally include: a further filter means configured to filter a further frequency band of the inertial sensor means; wherein the comparator means is for comparing a power spectral density of the further filter means with a at least one of the power spectral density of the first filter means or the power spectral density of the second filter means.

In example 95, the subject-matter of any one of examples 75 to 94 can optionally include that the further frequency band of the inertial sensor means is a further frequency band of the output of the inertial sensor means; and that the power spectral density of the further filter means is a power spectral density of an output of the further filter means.

In example 96, the subject-matter of any one of examples 75 to 95 can optionally include that the travel mode determination means is further for determining the travel mode further based on at least one of the power spectral density of the first filter means or the power spectral density of the second filter means.

In example 97, the subject-matter of example 96 can optionally include that the travel mode determination means is further for determining the travel mode based on at least one of whether the power spectral density of the first filter means fulfils a pre-determined criterion or whether the power spectral density of the second filter means fulfils a pre-determined criterion.

In example 98, the subject-matter of example 97 can optionally include that the pre-determined criterion is based on a pre-determined threshold.

In example 99, the subject-matter of example 98 can optionally include that the pre-determined threshold is determined using a learning method.

In example 100, the subject-matter of any one of examples 75 to 99 can optionally include that the travel mode determination means is further for determining the travel mode further based on at least one of a speed of the travel mode determination device, an altitude of the travel mode determination device, a brightness of the surrounding of the travel mode determination device, a loudness of the surrounding of the travel mode determination device.

In example 101, the subject-matter of any one of examples 75 to 100 can optionally include that the navigation system is for determining an operation mode based on the determined travel mode.

Example 102 is a mobile radio communication device comprising the travel mode determination device of any one of examples 75 to 101, wherein the mobile radio communication device is for determining an operation mode based on the determined travel mode.

Example 103 is a portable device including a navigation system and the travel mode determination device of any one of examples 75 to 100, the portable device further comprising: a global navigation satellite subsystem, an inertial navigation subsystem, and a processor; the processor being responsive to signals output by said global navigation satellite subsystem and said inertial navigation subsystem to implement a navigation mode discrimination system for a mode of navigation; wherein said navigation mode discrimination system is for sampling the frequency of excitations of signals output from the inertial sensor and determine one of the navigation modes based on the frequency of excitations of said inertial sensor.

In example 104, the subject-matter of example 103 can optionally include: a sampler means for sampling the frequency of excitations of signals from the inertial sensor; a low band filter means and a high band filter means for filtering the inertial frequency sample to a low frequency band sample and a high frequency band sample, a calculator module responsive to each of said low frequency band sample and said high frequency band sample for calculating a low frequency band power spectral density and a high frequency band power spectral density; a comparator means for comparing the low frequency band power spectral density and the high frequency band power spectral density to generate a mode selection signal; and the global navigation satellite subsystem being responsive to the mode selection signal to select one of the navigation modes.

In example 105, the subject-matter of example 103 or 104 can optionally include that the low frequency band filter means is for filtering a low frequency band selected to isolate excitations arising when the device is carried by a pedestrian and the high frequency band filter means is for filtering a high frequency band to isolate excitations experienced by the device carried in a motor vehicle.

In example 106, the subject-matter of example 105 can optionally include that the low frequency band filter means is for filtering a frequency band between 2Hz and 10Hz and the high frequency band filter means is for filtering a frequency band between10Hz and 25Hz.

In example 107, the subject-matter of any one of examples 104 to 106 can optionally include that a comparator means is arranged for comparing the low frequency power spectral density with a first predetermined threshold and where the device is configured to select the road navigation mode when the low frequency power spectral density is smaller than said first threshold.

In example 108, the subject-matter of example 107 can optionally include that a comparator means is arranged for comparing the low frequency spectral density with a second predetermined threshold larger than the first threshold, a calculator to calculate a ratio of the low frequency band power spectral density and the high frequency band power spectral density to generate a power spectral density ratio; and a comparator means arranged for comparing the power spectral density ratio with a high power spectral density ratio threshold; wherein the system is arranged for generating the mode selection signal to select the pedestrian navigation mode when the low frequency spectral density is between the first threshold and the second threshold and the power spectral density ratio exceeds the high spectral density ratio threshold; and the road navigation mode when the power spectral density ratio is less than the high power spectral density ratio.

In example 109, the subject-matter of example 108 can optionally include that the system is arranged so that when: the low frequency spectral density exceeds the second threshold, and the power spectral density ratio is greater than a lower spectral density ratio threshold, the mode selection signal is generated to select the pedestrian navigation mode; and the low frequency spectral density exceeds the second threshold, and the power spectral density ratio is less than the lower spectral density ratio threshold the mode selection signal is generated to select the road navigation mode.

In example 110, the subject-matter of any one of examples 103 to 109 can optionally include that a timer means is set for delaying a switch from the pedestrian navigation mode to the road navigation mode when the mode discrimination routine responds to the inertial frequency sample to implement a change from the pedestrian navigation mode to the road navigation mode.

In example 111, the subject-matter of any one of examples 103 to 110 can optionally include that the device is a communication device.

Example 112 is a computer readable medium including program instructions which when executed by a processor cause the processor to perform a method for controlling a radio communication device, the computer readable medium further including program instructions which when executed by a processor cause the processor to perform the method of any one of examples 38 to 74.

While specific aspects have been described, it should be understood by those skilled in the art that various changes in form and detail may be made therein without departing from the spirit and scope of the aspects of this disclosure as defined by the appended claims. The scope is thus indicated by the appended claims and all changes which come within the meaning and range of equivalency of the claims are therefore intended to be embraced.

## Claims

1. A travel mode determination device comprising:
an inertial sensor;
a first filter configured to filter a first frequency band of the inertial sensor;
a second filter configured to filter a second frequency band of the inertial sensor;
a comparator configured to compare a power spectral density of the first filter with a power spectral density of the second filter; and
a travel mode determination circuit configured to determine a travel mode of the travel mode determination device based on the comparator.

2. The travel mode determination device of claim 1, further comprising:
at least one further inertial sensor.

3. The travel mode determination device of claim 1 or 2,
wherein the inertial sensor comprises at least one sensor selected from a list of sensors consisting of:
an accelerometer;
a one-axis accelerometer;
a two-axes accelerometer;
a three-axes accelerometer;
a gyroscope;
a one-axis gyroscope;
a two-axes gyroscope;
a three-axes gyroscope; and
any combination thereof.

4. The travel mode determination device of any one of claims 1 to 3,
wherein the travel mode comprises at least one travel mode selected from a list of travel modes consisting of:
walking;
driving;
using a car with a Diesel engine;
using a car with a petrol engine;
using a car with a gas engine;
using an electrical car;
using an electrical car in motion;
using a bicycle;
using a bicycle in motion;
using a road of good quality;
using a deteriorated road;
using a bus;
using a train;
using a ship;
using an airplane;
a pedestrian navigation mode; and
a road navigation mode.

5. The travel mode determination device of any one of claims 1 to 4,
wherein the comparator is configured to determine a ratio of the power spectral density of the first filter and the power spectral density of the second filter; and
wherein the travel mode determination circuit is configured to determine the travel mode based on the ratio.

6. The travel mode determination device of any one of claims 1 to 5,
wherein the first filter comprises a filter circuit using a first set of filter parameters;
wherein the second filter comprises the filter circuit using a second set of filter parameters.

7. The travel mode determination device of any one of claims 1 to 6,
wherein the first frequency band is a low frequency band;
wherein the second frequency band is a high frequency band.

8. The travel mode determination device of claim 7,
wherein the first filter is configured to filter a low frequency band selected to isolate excitations arising when the travel mode determination device is carried by a pedestrian and the second filter is configured to filter a high frequency band to isolate excitations experienced by the travel mode determination device carried in a motor vehicle.

9. The travel mode determination device of any one of claims 1 to 8, further comprising:
a further filter configured to filter a further frequency band of the inertial sensor;
wherein the comparator is configured to compare a power spectral density of the further filter with a at least one of the power spectral density of the first filter or the power spectral density of the second filter.

10. The travel mode determination device of any one of claims 1 to 9,
wherein the travel mode determination circuit is further configured to determine the travel mode further based on at least one of the power spectral density of the first filter or the power spectral density of the second filter.

11. A portable device including a navigation system and the travel mode determination device of any one of claims 1 to 10, the portable device further comprising:
a global navigation satellite subsystem, an inertial navigation subsystem, and a processor;
the processor being responsive to signals output by said global navigation satellite subsystem and said inertial navigation subsystem to implement a navigation mode discrimination system for a mode of navigation;
wherein said navigation mode discrimination system is arranged to sample the frequency of excitations of signals output from the inertial sensor and determine one of the navigation modes based on the frequency of excitations of said inertial sensor.

12. The portable device of claim 11, further comprising:
a sampler to sample the frequency of excitations of signals from the inertial sensor;
a low band filter and a high band filter configured to filter the inertial frequency sample to a low frequency band sample and a high frequency band sample,
a calculator module responsive to each of said low frequency band sample and said high frequency band sample configured to calculate a low frequency band power spectral density and a high frequency band power spectral density,
a comparator configured to compare the low frequency band power spectral density and the high frequency band power spectral density to generate a mode selection signal; and
the global navigation satellite subsystem being responsive to the mode selection signal to select one of the navigation modes.

13. A method for controlling a travel mode determination device comprising:
acquiring a signal from an inertial sensor;
filtering a first frequency band of the signal;
filtering a second frequency band of the signal;
comparing a power spectral density of filtering the first frequency band with a power spectral density of filtering the second frequency band; and
determining a travel mode of the travel mode determination device based on the comparing.

14. The method of claim 13,
wherein the travel mode comprises at least one travel mode selected from a list of travel modes consisting of:
walking;
driving;
using a car with a Diesel engine;
using a car with a petrol engine;
using a car with a gas engine;
using an electrical car;
using an electrical car in motion;
using a bicycle;
using a bicycle in motion;
using a road of good quality;
using a deteriorated road;
using a bus;
using a train;
using a ship;
using an airplane;
a pedestrian navigation mode; and
a road navigation mode.

15. A computer readable medium including program instructions which when executed by a processor cause the processor to perform a method for controlling a radio communication device, the computer readable medium further including program instructions which when executed by a processor cause the processor to perform the method of claim 13 or 14.
